# EUROPEAN PATENT APPLICATION

(11) **EP 4 026 459 A1**
(43) Date of publication of application: **13.07.2022**
(21) Application number: 20861020.4
(22) Date of filing: 28.08.2020
(51) Int. Cl.: A47J 36/04, C08K 7/00, C08K 9/02, C08L 67/04, C08K 3/013

(54) **LIQUID CRYSTALLINE POLYESTER RESIN COMPOSITION AND MOLDED BODY**

(30) Priority: 04.09.2019 JP 2019161352
(71) Applicant: SUMITOMO CHEMICAL COMPANY, LIMITED, Tokyo 103-6020 (JP)
(72) Inventor: SAITO, Shintaro, Tsukuba-shi, Ibaraki 300-3294 (JP); HEGI, Hiromitsu, Katsuragi-shi, Nara 639-2123 (JP)
(74) Representative: Vossius & Partner Patentanwälte Rechtsanwälte mbB
(86) International application number: PCT/JP2020/032621
(87) International publication number: WO 2021/044969

(57) **Abstract**

A liquid crystal polyester resin composition contains a component (P) : a liquid crystal polyester resin, a component (M) : a non-metallic and powdery pigment having a metallic color, and a component (F) : an inorganic filler excluding the component (M).

## Description

### [Technical Field]

The present invention relates to a liquid crystal polyester resin composition and a molded body produced by using the liquid crystal polyester resin composition.

Priority is claimed on Japanese Patent Application No. 2019-161352, filed September 4, 2019, the content of which is incorporated herein by reference.

### [Background Art]

In recent years, a liquid crystal polyester resin composition has come to be used as a material for an appearance component.

A liquid crystal polyester resin has particularly excellent heat resistance, and thus the liquid crystal polyester resin is used for tableware used at a high temperature. A molded body used for tableware is required to have high design property, and for example, there is a demand for imparting a metallic appearance.

In response to this demand, a metallic material and the like using a metallic filler to be contained in the liquid crystal polyester resin composition has been developed.

For example, Patent Document 1 discloses a molded body produced by using a liquid crystal polymer composition containing a metal pigment (metal particle, such as aluminum, zinc, iron, magnesium, copper, and nickel).

### [Citation List]

### [Patent Document]

[Patent Document 1]
Specification of United States Patent Application, Publication No. 2014/0099459

### [Summary of Invention]

### [Technical Problem]

In a case in which a liquid crystal polyester resin composition contains a metallic filler, such as the metal pigment disclosed in Patent Document 1, insulation resistance of the liquid crystal polyester resin composition is decreased. Therefore, in a case in which the liquid crystal polyester resin composition is used as a material for an electronic component, a peripheral member for electromagnetic induction heating, or a microwave heating container or a peripheral member thereof, there is a problem in that its use is restricted.

To solve such a problem, a method of using a non-metal based metallic filler instead of a metallic filler can be considered. However, in a case in which the liquid crystal polyester resin composition contains a non-metal based metallic filler, although a metallic appearance is achieved, there is a problem in that a flow mark is likely to occur.

The present invention has been made in view of the circumstances described above, and an object of the present invention is to provide a liquid crystal polyester resin composition having high design property and capable of suppressing the occurrence of a flow mark.

### [Solution to Problem]

In order to solve the object described above, the present invention has adopted the following configuration.
[1] A liquid crystal polyester resin composition containing a component (P) : a liquid crystal polyester resin, a component (M) : a non-metallic and powdery pigment having a metallic color, and a component (F) : an inorganic filler excluding the component (M).
[2] The liquid crystal polyester resin composition according to [1], in which the component (M) is a component in which a plate-shaped inorganic filler particle is coated with a metal oxide.
[3] The liquid crystal polyester resin composition according to [2], in which the plate-shaped inorganic filler particle in the component (M) contains mica.
[4] The liquid crystal polyester resin composition according to [3], in which the plate-shaped inorganic filler particle in the component (M) contains synthetic mica.
[5] The liquid crystal polyester resin composition according to any one of [1] to [4], in which a content of the component (M) is 4 to 50 parts by mass with respect to 100 parts by mass of the component (P).
[6] The liquid crystal polyester resin composition according to any one of [1] to [5], in which the component (F) is a plate-shaped particle.
[7] The liquid crystal polyester resin composition according to any one of [1] to [6], in which a content of the component (F) is 10 to 80 parts by mass with respect to 100 parts by mass of the component (P).
[8] The liquid crystal polyester resin composition according to any one of [1] to [7], in which a median diameter (D50) of the component (M) is 5 to 100 µm.
[9] A molded body produced by using the liquid crystal polyester resin composition according to any one of [1] to [8].
[10] The molded body according to [9], in which the molded body is ovenware.

### [Advantageous Effects of Invention]

According to the present invention, it is possible to provide a liquid crystal polyester resin composition having high design property and capable of suppressing the occurrence of a flow mark.

### [Description of Embodiments]

### (Liquid crystal polyester Resin Composition)

A liquid crystal polyester resin composition according to the present embodiment contains a component (P) : a liquid crystal polyester resin, a component (M) : a non-metallic and powdery pigment having a metallic color, and a component (F) : an inorganic filler excluding the component (M).

In the following, each component contained in the liquid crystal polyester resin composition according to the present embodiment will be described in detail.

### <component (P): Liquid crystal polyester Resin>

The component (P): the liquid crystal polyester resin according to the present embodiment has a repeating unit derived from hydroxycarboxylic acid as a mesogenic group. Here, the term "hydroxycarboxylic acid" means a compound having both a hydroxy group (-OH) and a carboxy group (-C(=O)-OH) in one molecule.

It is preferable that the component (P) be a polyester resin that exhibits liquid crystallinity in a molten state, and melts at a temperature of 450°C or lower. It is preferable that the liquid crystal polyester resin be a wholly aromatic liquid crystal polyester resin using only an aromatic compound as a raw material monomer.

Exemplary examples of the component (P) include a component obtained by polymerizing (polycondensing) aromatic hydroxycarboxylic acid, aromatic dicarboxylic acid, and at least one compound selected from the group consisting of an aromatic diol, an aromatic hydroxylamine , and an aromatic diamine, a component obtained by polymerizing a plurality of types of aromatic hydroxycarboxylic acid, and a component obtained by polymerizing polyester, such as polyethylene terephthalate, and aromatic hydroxycarboxylic acid. Here, polymerizable derivatives of the aromatic hydroxycarboxylic acid, the aromatic dicarboxylic acid, the aromatic diol, the aromatic hydroxylamine , and the aromatic diamine may be each independently used in place of a part or all thereof.

Exemplary examples of the polymerizable derivative of the compound having a carboxy group, such as aromatic hydroxycarboxylic acid and aromatic dicarboxylic acid, include a derivative (ester) obtained by converting a carboxy group into an alkoxycarbonyl group or an aryloxycarbonyl group, a derivative (acid halide) obtained by converting a carboxy group into a haloformyl group, and a derivative (acid anhydride) obtained by converting a carboxy group into an acyloxycarbonyl group.

Exemplary examples of the polymerizable derivative of the compound having a hydroxy group, such as the aromatic hydroxycarboxylic acid, the aromatic diol, and the aromatic hydroxylamine , include a derivative (acylated product) obtained by acylating a hydroxy group and converting the acylated hydroxy group into an acyloxyl group.

Exemplary examples of the polymerizable derivative of the compound having an amino group, such as the aromatic hydroxylamine and aromatic diamine, include a derivative (acylated product) obtained by acylating an amino group and converting the acylated amino group into an acylamino group.

The component (P) is preferably a component having a repeating unit represented by the following formula (1) (hereinafter, may be referred to as a "repeating unit (1)"). The repeating unit (1) corresponds to the mesogenic group described above.

(1) -O-Ar¹-CO-

[In the formula (1), Ar¹ represents a phenylene group, a naphthylene group, or a biphenylylene group, and one or more hydrogen atoms in the groups represented by Ar¹ may be substituted with a halogen atom, an alkyl group having 1 to 10 carbon atoms, or an aryl group having 6 to 20 carbon atoms].

Exemplary examples of the halogen atom that can be substituted with one or more hydrogen atoms in the groups represented by Ar¹ include a fluorine atom, a chlorine atom, a bromine atom, and an iodine atom.

Exemplary examples of the alkyl group having 1 to 10 carbon atoms that can be substituted with one or more hydrogen atoms in the groups represented by Ar¹ include a methyl group, an ethyl group, an n-propyl group, an isopropyl group, an n-butyl group, an isobutyl group, a sec-butyl group, a tert-butyl group, an n-hexyl group, an n-heptyl group, a 2-ethylhexyl group, an n-octyl group, an n-nonyl group, and an n-decyl group.

Exemplary examples of the aryl group having 6 to 20 carbon atoms that can be substituted with one or more hydrogen atoms in the groups represented by Ar¹ include a monocyclic aromatic group, such as a phenyl group, an o-tolyl group, an m-tolyl group, and a p-tolyl group; and a condensed ring aromatic group, such as a 1-naphthyl group and a 2 naphthyl group.

In a case in which one or more hydrogen atoms in the groups represented by Ar¹ are substituted with these groups, the number of substitutions is preferably 1 or 2, and more preferably 1.

The repeating unit (1) is a repeating unit derived from a predetermined aromatic hydroxycarboxylic acid.

The repeating unit (1) is preferably a repeating unit in which Ar¹ is a 1,4-phenylene group (repeating unit derived from 4-hydroxybenzoic acid) and a repeating unit in which Ar¹ is a 2,6-naphthylene group (repeating unit derived from 6-hydroxy-2-naphthoic acid).

That is, as a preferable example of the component (P), a component having a repeating unit derived from any one or both of parahydroxybenzoic acid and 6-hydroxy-2-naphthoic acid is preferable.

The component (P) is preferably a component having a repeating unit represented by the following formula (2) (hereinafter, may be referred to as a "repeating unit (2)").

In addition, the component (P) is preferably a component having a repeating unit represented by the following formula (3) (hereinafter, may be referred to as a "repeating unit (3)"). Among these, a component having the repeating unit (1) (preferably Ar¹ is a 1,4-phenylene group, or a 2,6-naphthylene group), the repeating unit (2), and the repeating unit (3) is more preferable.

(2) -CO-Ar²-CO-

[In the formula (2), Ar² represents a phenylene group, a naphthylene group, a biphenylylene group, or a group represented by the following formula (4). One or more hydrogen atoms contained in Ar² may be substituted with a halogen atom, an alkyl group having 1 to 10 carbon atoms, or an aryl group having 6 to 20 carbon atoms].

(4) -Ar⁴-Z-Ar⁵-

[In the formula (4), Ar⁴ and Ar⁵ each independently represents a phenylene group or a naphthylene group.

Z represents an oxygen atom, a sulfur atom, a carbonyl group, a sulfonyl group, or an alkylidene group having 1 to 10 carbon atoms].

(3) -X-Ar³-Y-

[In the formula (3), Ar³ represents a phenylene group, a naphthylene group, a biphenylylene group, or a group represented by the formula (4).

X and Y each independently represents an oxygen atom or an imino group (-NH-).

One or more hydrogen atoms contained in Ar³ may be substituted with a halogen atom, an alkyl group having 1 to 10 carbon atoms, or an aryl group having 6 to 20 carbon atoms].

(4) -Ar⁴-Z-Ar⁵-

[In the formula (4), Ar⁴ and Ar⁵ each independently represents a phenylene group or a naphthylene group.

Z represents an oxygen atom, a sulfur atom, a carbonyl group, a sulfonyl group, or an alkylidene group having 1 to 10 carbon atoms].

The halogen atom, the alkyl group, and the aryl group that can be substituted with one or more hydrogen atoms in the groups represented by Ar² or Ar³ are the same as the halogen atom that can be substituted with one or more hydrogen atoms in the groups represented by Ar¹, the alkyl group having 1 to 10 carbon atoms, and the aryl group having 6 to 20 carbon atoms.

In a case in which one or more hydrogen atoms in the groups represented by Ar² or Ar³ are substituted with these groups, the number of substitutions is preferably 1 or 2, and more preferably 1, independently of each other for each of the groups represented by Ar² or Ar³.

Exemplary examples of the alkylidene group having 1 to 10 carbon atoms include a methylene group, an ethylidene group, an isopropylidene group, an n-butylidene group, and a 2-ethylhexylidene group, and the number of carbon atoms thereof is preferably 1 to 10.

The repeating unit (2) is a repeating unit derived from a predetermined aromatic dicarboxylic acid.

The repeating unit (2) is preferably a repeating unit in which Ar² is a 1,4-phenylene group (repeating unit derived from terephthalic acid), a repeating unit in which Ar² is a 1,3-phenylene group (repeating unit derived from isophthalic acid), a repeating unit in which Ar² is a 2,6-naphthylene group (repeating unit derived from 2,6-naphthalenedicarboxylic acid), a repeating unit in which Ar² is a 4,4'-biphenylylene group (repeating unit derived from 4,4'-dicarboxybiphenyl), or a repeating unit in which Ar² is a diphenyl ether-4,4'-diyl group (repeating unit derived from 4,4'-dicarboxydiphenyl ether), and more preferably a repeating unit in which Ar² is a 1,4-phenylene group, a 1,3-phenylene group, a 2,6-naphthylene group, or a 4,4'-biphenylylene group.

The repeating unit (3) is a repeating unit derived from a predetermined aromatic diol, aromatic hydroxylamine, or aromatic diamine.

The repeating unit (3) is preferably a repeating unit in which Ar³ is a 1,4-phenylene group (repeating unit derived from p-aminophenol or p-phenylenediamine), a repeating unit in which Ar³ is a 1,3-phenylene group (repeating unit derived from 1,3-benzendiol, m-aminophenol (for example, 4-(acetoxyamino)phenol) or m-phenylenediamine), a repeating unit in which Ar³ is a 2,6-naphthylene group (a repeating unit derived from 2,6-dihydroxynaphthalene, a repeating unit derived from 2-hydroxy-6-aminonaphthalene, or a repeating unit derived from 2,6-diaminonaphthalene), a repeating unit in which Ar³ is a 4,4'-biphenylylene group (repeating unit derived from 4,4'-dihydroxybiphenyl, 4-amino-4'-hydroxybiphenyl, or 4,4'-diaminobiphenyl), or a repeating unit in which Ar³ is a diphenyl ether-4,4'-diyl group (a repeating unit derived from 4,4'-dihydroxydiphenyl ether, a repeating unit derived from 4-hydroxy-4'-aminodiphenyl ether, or a repeating unit derived from 4,4'-diaminodiphenyl ether), and more preferably a repeating unit in which Ar³ is a 1,4-phenylene group, a 1,3-phenylene group, a 2,6-naphthylene group, or a 4,4'-biphenylylene group.

The component (P) preferably has the repeating unit (3) in which each of X and Y is an oxygen atom, that is, a repeating unit derived from a predetermined aromatic diol, and more preferably only has the repeating unit (3) in which each of X and Y is an oxygen atom.

That is, the component (P) more preferably has a repeating unit represented by the following formula (21) (hereinafter, may be referred to as a "repeating unit (21)") and a repeating unit represented by the following formula (31) (hereinafter, may be referred to as a "repeating unit (31)"), and still more preferably has the repeating unit (1) (preferably, Ar¹ is a 1,4-phenylene group, or a 2,6-naphthylene group), the repeating unit (21), and the repeating unit (31).

(21) -CO-Ar²¹-CO-

(31) -O-Ar³¹-O-

[In the formula (21) and the formula (31), Ar²¹ and Ar³¹ each independently represents a 1,4-phenylene group, a 1,3-phenylene group, a 2,6-naphthylene group, or a 4,4'-biphenylylene group. One or more hydrogen atoms in the groups represented by Ar²¹ or Ar³¹ may be each independently substituted with a halogen atom, an alkyl group having 1 to 10 carbon atoms, or an aryl group having 6 to 20 carbon atoms].

A content of the repeating unit (1) in the component (P) is preferably 30% by mole or more, more preferably 40% by mole or more and 80% by mole or less, still more preferably 50% by mole or more and 70% by mole or less, and particularly preferably 55% by mole or more and 70% by mole or less, with respect to a total of 100% by mole of the repeating unit (1), the repeating unit (2), and the repeating unit (3). In addition, the content of the repeating unit (1) in the component (P) is preferably 30% by mole or more, more preferably 40% by mole or more and 80% by mole or less, still more preferably 50% by mole or more and 70% by mole or less, and particularly preferably 55% by mole or more and 70% by mole or less, with respect to the total amount of all the repeating units.

In addition, in a case in which the repeating unit (1) of the component (P) is a repeating unit derived from parahydroxybenzoic acid, a content of the repeating unit derived from the parahydroxybenzoic acid is preferably 40% by mole or more, more preferably 45% by mole or more and 80% by mole or less, still more preferably 50% by mole or more and 70% by mole or less, and particularly preferably 55% by mole or more and 65% by mole or less, with respect to a total of 100% by mole of the repeating unit (1), the repeating unit (2), and the repeating unit (3). In addition, the content of the repeating unit derived from the parahydroxybenzoic acid in the component (P) is preferably 40% by mole or more, more preferably 45% by mole or more and 80% by mole or less, still more preferably 50% by mole or more and 70% by mole or less, and particularly preferably 55% by mole or more and 65% by mole or less, with respect to the total amount of all the repeating units.

In a case in which the content of the repeating unit (1) is 80% by mole or less, a processing temperature is less likely to be high and a flow mark is less likely to occur, which are preferable.

A content of the repeating unit (2) in the component (P) is preferably 35% by mole or less, more preferably 10% by mole or more and 35% by mole or less, still more preferably 15% by mole or more and 30% by mole or less, and particularly preferably 17.5% by mole or more and 27.5% by mole or less, with respect to a total of 100% by mole of the repeating unit (1), the repeating unit (2), and the repeating unit (3). In addition, the content of the repeating unit (2) in the component (P) is preferably 35% by mole or less, more preferably 10% by mole or more and 35% by mole or less, still more preferably 15% by mole or more and 30% by mole or less, and particularly preferably 17.5% by mole or more and 27.5% by mole or less, with respect to the total amount of all the repeating units.

In a case in which the repeating unit (2) of the component (P) is a repeating unit derived from terephthalic acid, a content of the repeating unit derived from the terephthalic acid is preferably 35% by mole or less, more preferably 10% by mole or more and 35% by mole or less, still more preferably 10% by mole or more and 20% by mole or less, and particularly preferably 11% by mole or more and 18% by mole or less, with respect to a total of 100% by mole of the repeating unit (1), the repeating unit (2), and the repeating unit (3). In addition, the content of the repeating unit derived from the terephthalic acid in the component (P) is preferably 35% by mole or less, more preferably 10% by mole or more and 35% by mole or less, still more preferably 10% by mole or more and 20% by mole or less, and particularly preferably 11% by mole or more and 18% by mole or less, with respect to the total amount of all the repeating units.

In a case in which the content of the repeating unit (2) is within the range described above, sufficient heat resistance can be imparted to a molded body, and the strength in a case of use in an oven can be increased.

A content of the repeating unit (3) in the component (P) is preferably 35% by mole or less, more preferably 10% by mole or more and 35% by mole or less, still more preferably 15% by mole or more and 30% by mole or less, and particularly preferably 17.5% by mole or more and 27.5% by mole or less, with respect to a total of 100% by mole of the repeating unit (1), the repeating unit (2), and the repeating unit (3). In addition, the content of the repeating unit (3) in the component (P) is preferably 35% by mole or less, more preferably 10% by mole or more and 35% by mole or less, still more preferably 15% by mole or more and 30% by mole or less, and particularly preferably 17.5% by mole or more and 27.5% by mole or less, with respect to the total amount of all the repeating units. It should be noted that the sum of the contents of the repeating units (1) to (3) in the component (P) does not exceed 100% by mole.

It should be noted that the component (P) may have two or more types of repeating units (1) to (3) independently of each other. In addition, the component (P) may have a repeating unit other than the repeating units (1) to (3), but the content thereof is preferably 0% by mole or more and 10% by mole or less, and more preferably 0% by mole or more and 5% by mole or less, with respect to the total of all the repeating units.

One type of the component (P) may be used alone, or two or more types thereof may be used in combination.

In a case in which two types of the liquid crystal polyester resin are used in combination, the liquid crystal polyester resin need only be appropriately selected depending on the molded body to be produced, for example, in a case in which a liquid crystal polyester resin (1) and a liquid crystal polyester resin (2) having different compounding ratios of the repeating units (1) to (3) are represented by [content of liquid crystal polyester resin (1)]/[content of liquid crystal polyester resin (2)] (part by mass/part by mass), it is preferably 90/10 to 10/90, more preferably 80/20 to 20/80, and still more preferably 60/40 to 40/60.

It is preferable that the component (P) be manufactured by melt-polymerizing the raw material monomer corresponding to the repeating unit constituting the component (P) and solid-phase polymerizing the obtained polymer (prepolymer). As a result, a high-molecular-weight liquid crystal polyester resin having high heat resistance, high strength, or rigidity can be manufactured with good operability. The melt-polymerization may be performed in the presence of a catalyst, and exemplary examples of the catalyst include a metal compound, such as magnesium acetate, stannous acetate, tetrabutyl titanate, lead acetate, sodium acetate, potassium acetate, antimony trioxide, or a nitrogen-containing heterocyclic compound, such as N,N-dimethylamino pyridine, N-methylimidazole, and a nitrogen-containing heterocyclic compound is preferably used.

A flow start temperature of the component (P) is preferably 270°C or higher, more preferably 270°C or higher and 400°C or lower, and still more preferably 280°C or higher and 380°C or lower.

In addition, the flow start temperature of the component (P) is within the range described above, the heat resistance, strength, or rigidity are good, heat deterioration is less likely to occur during molding, and the viscosity is less likely to be high during melting, so that it tends to be difficult for the fluidity to be decreased.

It should be noted that the flow start temperature is also called a flow temperature or a fluid temperature, and is a temperature indicating a viscosity of 4800 Pa·s (48000 poise) when the liquid crystal polyester resin melts while raising the temperature at a rate of 4°C/min under a load of 9.8 MPa (100 kgf/cm²) by using a capillary rheometer and extruding from a nozzle having an inner diameter of 1 mm and a length of 10 mm, and is a measure of the molecular weight of the liquid crystal polyester resin (see "liquid crystalline polymer-synthesis/molding/application-", edited by Naoyuki Koide, CMC Publishing Co., Ltd., June 5, 1987, p. 95).

A content of the component (P) in the present embodiment is preferably 30% by mass or more, more preferably 40% by mass or more, and still more preferably 50% by mass or more, with respect to the total amount (100% by mass) of the liquid crystal polyester resin composition according to the present embodiment.

In addition, the content of the component (P) in the present embodiment is preferably 95% by mass or less, more preferably 90% by mass or less, and still more preferably 85% by mass or less, with respect to the total amount (100% by mass) of the liquid crystal polyester resin composition according to the present embodiment.

For example, the content of the component (P) in the present embodiment is preferably 30% to 95% by mass, more preferably 40% to 90% by mass, and still more preferably 50% to 85% by mass, with respect to the total amount (100% by mass) of the liquid crystal polyester resin composition according to the present embodiment.

### <component (M): Non-metallic and powdery pigment having a metallic color>

The liquid crystal polyester resin composition according to the present embodiment contains the component (M): the non-metallic and powdery pigment having a metallic color. Here, the term "non-metallic and powdery pigment having a metallic color" refers to a pigment that exhibits metallic brilliance, excluding a pigment made of metal powder (aluminum powder, bronze powder, and the like).

By containing the component (M), the liquid crystal polyester resin composition according to the present embodiment is imparted with a metallic appearance and metallic brilliance, and can improve the design property.

Exemplary examples of the component (M) include a component in which a plate-shaped inorganic filler particle is coated with an inorganic material, bismuth oxychloride, and fish scale foil. Among these, the component (M) is preferably the plate-shaped inorganic filler particle coated with the inorganic material.

As the component in which the plate-shaped inorganic filler particle is coated with the inorganic material, specifically, there is a component in which the plate-shaped inorganic filler particle, which is a base material, is coated with the inorganic material having a high refractive index, such as titanium oxide.

Exemplary examples of the plate-shaped inorganic filler particle as the base materials include mica, synthetic mica (synthetic phlogopite), and glass flake.

Exemplary examples of the inorganic material include titanium oxide, zinc oxide, tin oxide, iron oxide, ferrous iron, aluminum oxide, calcium fluoride, silica, and magnesium oxide.

As the plate-shaped inorganic filler particle coated with the inorganic material, the plate-shaped inorganic filler particle may be coated with one type of the inorganic material alone, or may be coated with two or more types of the inorganic materials.

Among the components in which the plate-shaped inorganic filler particle is coated with the inorganic material, a component in which the plate-shaped inorganic filler particle is coated with metal oxide is preferable.

More specifically, exemplary examples of the component in which the plate-shaped inorganic filler particle is coated with the metal oxide include titanium oxide-coated mica in which mica is coated with titanium oxide, iron oxide/titanium oxide-coated mica in which mica is coated with iron oxide, and then further coated with titanium oxide, titanium oxide-coated synthetic mica in which synthetic mica is coated with titanium oxide, iron oxide/titanium oxide-coated synthetic mica in which synthetic mica is coated with iron oxide, and then further coated with titanium oxide, titanium oxide-coated glass flake in which glass flake is coated with titanium oxide, iron oxide/titanium oxide-coated glass flake in which glass flake is coated with iron oxide, and then further coated with titanium oxide, and titanium oxide/silica-coated glass flake in which glass flake is coated with titanium oxide, and then further coated with silica.

Among the these, the component (M) is preferably titanium oxide-coated mica or titanium oxide-coated synthetic mica, and more preferably titanium oxide-coated synthetic mica.

A median diameter (D50) of the component (M) is preferably 5 to 120 µm, more preferably 5 to 100 µm, further preferably 8 to 80 µm, still more preferably 8 to 60 µm, and particularly preferably 9 to 30 µm. In a case in which the median diameter (D50) of the component (M) is equal to or more than a lower limit value of the preferable range described above, the design property is further improved.

In a case in which the median diameter (D50) of the component (M) is equal to or less than an upper limit value of the preferable range described above, the occurrence of a flow mark during molding can be further suppressed.

It should be noted that the median diameter (D50) is a particle diameter in a case in which a cumulative volume is 50% when a volume cumulative distribution curve is drawn from a small diameter side in a particle diameter distribution of the component (M).

In addition, it is known that in a case in which the component (M) is the component in which the plate-shaped inorganic filler particle is coated with the inorganic material, the median diameter (D50) is not changed during mixing with a liquid crystal polyester resin or another inorganic filler, kneading, or subsequent molding. Therefore, the median diameter (D50) of the component (M) in the liquid crystal polyester resin composition can be measured by a laser diffraction type particle diameter distribution measurement device (manufactured by HORIBA, Ltd., trade name: LA-950V2, and the like) by dispersing the component (M) in water before mixing and kneading with other components.

In addition, in a case in which the median diameter (D50) of the component (M) is within the preferable range described above, the metallic brilliance becomes stronger when the particle diameter distribution of the component (M) is sharp, and a metallic appearance with suppressed glare is achieved when the particle diameter distribution of the component (M) is broad. As described above, a desired appearance can be imparted by appropriately adjusting the particle diameter of the component (M).

One type of the component (M) may be used alone, or two or more types thereof may be used in combination.

A content of the component (M) is preferably 4 to 50 parts by mass, more preferably 6 to 45 parts by mass, and still more preferably 8 to 40 parts by mass, with respect to 100 parts by mass of the component (P).

In a case in which the content of the component (M) is equal to or more than a lower limit value of the preferable range described above, the design property is further improved.

In a case in which the content of the component (M) is equal to or less than an upper limit value of the preferable range described above, the occurrence of a flow mark during molding can be further suppressed.

The content of the component (M) in the present embodiment is preferably 1% by mass or more, more preferably 3% by mass or more, and still more preferably 4% by mass or more, with respect to the total amount (100% by mass) of the liquid crystal polyester resin composition according to the present embodiment.

In addition, the content of the component (M) in the present embodiment is preferably 35% by mass or less, more preferably 30% by mass or less, and still more preferably 25% by mass or less, with respect to the total amount (100% by mass) of the liquid crystal polyester resin composition according to the present embodiment.

For example, the content of the component (M) in the present embodiment is preferably 1% to 35% by mass, more preferably 3% to 30% by mass, and still more preferably 4% to 25% by mass, with respect to the total amount (100% by mass) of the liquid crystal polyester resin composition according to the present embodiment.

<component (F): Inorganic Filler Other Tha component (M) >

The liquid crystal polyester resin composition according to the present embodiment contains the component (F): the inorganic filler excluding the component (M).

By containing the component (F), the liquid crystal polyester resin composition according to the present embodiment can suppress the occurrence of a flow mark during molding.

The component (F): the inorganic filler excluding the component (M) may be a plate-shaped filler, or a granular filler excluding the plate-shaped filler.

Among these, the component (F) is preferably the plate-shaped particle.

Exemplary examples of the component (F) include a talc filler, a titanium oxide filler, and a pigment.

### «Talc Filler»

The talc filler is preferably pulverized hydrous magnesium silicate. A crystal structure of a molecule of the hydrous magnesium silicate is a pyrophyllite-type three-layer structure, and the talc filler is a stack of these structures. The talc filler is more preferably a flat plate-shaped filler obtained by finely pulverizing the crystal of the molecule of the hydrous magnesium silicate to about a unit layer.

The talc filler may be untreated or treated.

Exemplary examples of the treated talc filler include a filler which has been subjected to surface treatment with a known surfactant to improve the interfacial adhesiveness and dispersibility with the liquid crystal polyester resin. Exemplary examples of the surfactant include a silane coupling agent, a titanium coupling agent, higher fatty acid, higher fatty acid ester, higher fatty acid amide, and higher fatty acid salt.

A median diameter (D50) of the talc filler is preferably 5 to 30 µm, and more preferably 10 to 25 µm.

In a case in which the median diameter (D50) of the talc filler is within the range described above, the occurrence of a flow mark can be further suppressed.

One type of the talc filler may be used alone, or two or more types thereof may be used in combination.

A content of the talc filler is preferably 4 to 80 parts by mass, more preferably 8 to 75 parts by mass, and still more preferably 10 to 70 parts by mass, with respect to 100 parts by mass of the component (P).

In a case in which the content of the talc filler is within the range described above, the occurrence of a flow mark can be further suppressed.

The content of the talc filler in the present embodiment is preferably 4% by mass or more, more preferably 6% by mass or more, and still more preferably 8% by mass or more, with respect to the total amount (100% by mass) of the liquid crystal polyester resin composition according to the present embodiment.

In addition, the content of the talc filler in the present embodiment is preferably 60% by mass or less, more preferably 50% by mass or less, and still more preferably 40% by mass or less, with respect to the total amount (100% by mass) of the liquid crystal polyester resin composition according to the present embodiment.

For example, the content of the talc filler in the present embodiment is preferably 4% to 60% by mass, more preferably 6% to 50% by mass, and still more preferably 8% to 40% by mass, with respect to the total amount (100% by mass) of the liquid crystal polyester resin composition according to the present embodiment.

### «Titanium Oxide Filler»

The titanium oxide filler is not particularly limited, and a known filler can be used as titanium oxide filler for resin filling.

A crystal structure of the titanium oxide filler is not particularly limited, and may be a rutile type, an anatase type, or a mixture of both the rutile type and the anatase type. In the present invention, it is preferable to adopt a rutile type titanium oxide filler having a higher refractive index than the anatase type titanium oxide filler.

In addition, as the titanium oxide filler, a filler which has been subjected to surface treatment may be used.

For example, by applying the surface treatment by using inorganic metal oxide, a characteristic such as dispersibility can be improved. Exemplary examples of the inorganic metal oxide include aluminum oxide.

The median diameter of the titanium oxide filler is preferably 0.1 to 1 µm, and more preferably 0.15 to 0.25 µm.

A content of the titanium oxide filler is preferably 1 to 20 parts by mass, and more preferably 1 to 15 parts by mass, with respect to 100 parts by mass of the component (P).

### «Pigment»

Exemplary examples of the pigment include alumina, iron oxide, cobalt oxide, chromium oxide, manganese oxide, and carbon black. Among these, since a more metallic appearance can be achieved, carbon black is preferable.

A content of the pigment is preferably 0.01 to 5 parts by mass, more preferably 0.02 to 1 part by mass, and still more preferably 0.02 to 0.5 parts by mass, with respect to 100 parts by mass of the component (P).

The content of the pigment in the present embodiment is preferably 0.001% by mass or more, more preferably 0.005% by mass or more, and still more preferably 0.008% by mass or more, with respect to the total amount (100% by mass) of the liquid crystal polyester resin composition according to the present embodiment.

In addition, the content of the pigment in the present embodiment is preferably 3% by mass or less, more preferably 1% by mass or less, and still more preferably 0.5% by mass or less, with respect to the total amount (100% by mass) of the liquid crystal polyester resin composition according to the present embodiment.

For example, the content of the pigment in the present embodiment is preferably 0.001 % to 3% by mass, more preferably 0.005% to 1% by mass, and still more preferably 0.008% to 0.5% by mass, with respect to the total amount (100% by mass) of the liquid crystal polyester resin composition according to the present embodiment.

Among these, the component (F) in the present embodiment is preferably a talc filler from the viewpoint of the effect of suppressing the occurrence of a flow mark, and is preferably a pigment (preferably carbon black) from the viewpoint of improving the design property.

A compounding ratio (mass ratio) of the component (M) and the component (F) (component (F)/component (M)) is preferably 0.8 to 10, more preferably 1.0 to 9.0, and still more preferably 1.2 to 8.0.

In a case in which the compounding ratio (mass ratio) of the component (M) and the component (F) (component (F)/component (M)) is equal to or more than a lower limit value of the preferable range described above, the occurrence of a flow mark during molding can be further suppressed.

In a case in which the compounding ratio (mass ratio) of the component (M) and the component (F) (component (F)/component (M)) is equal to or less than an upper limit value of the preferable range described above, the design property is further improved.

A content of the component (F) in the present embodiment is preferably 4% by mass or more, more preferably 6% by mass or more, and still more preferably 8% by mass or more, with respect to the total amount (100% by mass) of the liquid crystal polyester resin composition according to the present embodiment.

In addition, the content of the component (F) in the present embodiment is preferably 60% by mass or less, more preferably 50% by mass or less, and still more preferably 40% by mass or less, with respect to the total amount (100% by mass) of the liquid crystal polyester resin composition according to the present embodiment.

For example, the content of the component (F) in the present embodiment is preferably 4% to 60% by mass, more preferably 6% to 50% by mass, and still more preferably 8% to 40% by mass, with respect to the total amount (100% by mass) of the liquid crystal polyester resin composition according to the present embodiment.

The liquid crystal polyester resin composition according to the present embodiment described above contains the component (P): the liquid crystal polyester resin, the component (M): the non-metallic and powdery pigment having a metallic color, and the component (F): the inorganic filler excluding the component (M) in combination. By containing the non-metal powder-based component (M), metallic brilliance is exhibited, and the design property is improved. On the other hand, in a case in which the component (M) is contained in the component (P), a flow mark is highly likely to occur. However, by using the component (F) in combination here, the occurrence of a flow mark is suppressed. As described above, in the liquid crystal polyester resin composition according to the present embodiment, both the improvement of the design property and the effect of suppressing the occurrence of a flow mark can be achieved at the same time.

The present invention includes the following aspects.
"1" A liquid crystal polyester resin composition containing: a component (P) : a liquid crystal polyester resin, a component (M) : a non-metallic and powdery pigment having a metallic color, and a component (F) : an inorganic filler excluding the component (M), in which a content of the component (P) is preferably 30% to 95% by mass, more preferably 40% to 90% by mass, and still more preferably 50% to 85% by mass, with respect to a total amount (100% by mass) of the liquid crystal polyester resin composition according to the present embodiment, a content of the component (M) is preferably 1% to 35% by mass, more preferably 3% to 30% by mass, and still more preferably 4% to 25% by mass, with respect to the total amount (100% by mass) of the liquid crystal polyester resin composition according to the present embodiment, and a content of the component (F) is preferably 4% to 60% by mass, more preferably 6% to 50% by mass, and still more preferably 8% to 40% by mass, with respect to the total amount (100% by mass) of the liquid crystal polyester resin composition according to the present embodiment.
"2" The liquid crystal polyester resin composition according to "1", in which the component (M) is preferably titanium oxide-coated mica or titanium oxide-coated synthetic mica, and more preferably titanium oxide-coated synthetic mica.
"3" The liquid crystal polyester resin composition according to "1" or "2", in which a compounding ratio (mass ratio) of the component (M) and the component (F) (component (F)/component (M)) is preferably 0.8 to 10, more preferably 1.0 to 9.0, and still more preferably 1.2 to 8.0.
"4" The liquid crystal polyester resin composition according to any one of "1" to "3", further containing a pigment in which a content of the pigment is preferably 0.001% to 3% by mass, more preferably 0.005% to 1% by mass, and still more preferably 0.008% to 0.5% by mass with respect to the total amount (100% by mass) of the liquid crystal polyester resin composition according to the present embodiment.
"5" The liquid crystal polyester resin composition according to any one of "1" to "4", in which, in a case in which a reflectivity of 500 nm at a detection angle of 30° of light, which is incident at an incident angle of 45° and reflected from a surface of a test piece, is measured for a molded body having a width of 60 mm × a length 40 mm × a thickness 2 mm, which is produced by injection molding, by using a variable-angle photometer (manufactured by DENSHOKU INDUSTRIES Co., Ltd., trade name: GC5000L), the liquid crystal polyester resin composition has a characteristic such that the reflectivity is preferably 95 to 190, more preferably 98 to 180, and still more preferably 100 to 160.

### (Molded Body)

The molded body according to the present embodiment uses the liquid crystal polyester resin composition described above as a forming material.

Since the molded body is produced by using the liquid crystal polyester resin composition described above, it has high design property and suppresses the occurrence of a flow mark.

As a molding method of the liquid crystal polyester resin composition according to the present embodiment, a melt molding method is preferable, and exemplary examples thereof include an injection molding method, an extrusion molding method, such as a T die method or an inflation method, a compression molding method, a blow molding method, a vacuum molding method, and a press molding method. Among these, the injection molding method is preferable.

Exemplary examples of products and components of the molded body include a bobbin, such as an optical pickup bobbin and a trans bobbin; a relay component, such as a relay case, a relay base, a relay sprue, and a relay armature; a connector, such as RIMM, DDR, CPU socket, S/O, DIMM, a Board to Board connector, an FPC connector, and a card connector; a reflector, such as a lamp reflector and an LED reflector; a holder, such as a lamp holder and a heater holder; a diaphragm, such as a loudspeaker diaphragm; a separate claw, such as a separate claw for a copier and a separate claw for a printer; a camera module component; a switch component; a motor component; a sensor component; a hard disk drive component; tableware, such as ovenware; a vehicle component; an aircraft component; and a sealing member, such as a sealing member for a semiconductor element and a sealing member for a coil.

In addition, exemplary examples of products and components of the molded body other than the above include a copier- and a printing machine-related component, such as a separate claw and a heater holder; a machine component, such as an impeller, a fan gear, a gear, a bearing, a motor component, and a case; an automobile/vehicle-related component, such as a mechanical component for an automobile, fuel-related/exhaust system/intake system various pipes, exhaust gas, a coolant, various oil temperature sensors, a thermostat base for an air conditioner, a motor insulator for an air conditioner, a brush holder for a radiator motor, a wiper motor-related component, a distributor, a starter switch, a starter relay, a wire harness for transmission, an air conditioner panel switch substrate, a coil for a fuel-related electromagnetic valve, a connector for a fuse, an ECU connector, a horn terminal, an electrical component insulation plate, a lamp socket, a lamp reflector, a lamp housing, a brake piston, a solenoid bobbin, an engine oil filter, and an ignition system case; a cooking utensil, such as a microwave cooking pot and heat-resistant tableware; an insulation or soundproofing material, such as a flooring material and a wall material, a supporting material, such as a beam or a column, a building material, such as a roofing material, or a material for civil engineering and construction; an aircraft, a spacecraft, a component for a spacecraft; a radiation facility member, such as a nuclear reactor; a marine facility member; a cleaning jig; an optical equipment component; valves; pipes; nozzles; filters; films; a medical equipment component and a medical material; a sensor component; sanitary equipment; sporting goods; and leisure goods.

The molded body according to the present embodiment is useful for tableware, such as ovenware, from the viewpoint that high design property can be further utilized. Further, the molded body according to the present embodiment is particularly suitable for ovenware from the viewpoints that the molded body can be used at a higher temperature as compared with a silicone molded body, and since a metallic filler is not contained, the molded body can be used in a microwave oven.

Since the molded body according to the present embodiment is produced by using the liquid crystal polyester resin composition described above, the molded body has high design property and suppresses the occurrence of a flow mark.

### [Examples]

In the following, the present invention will be described in more detail with reference to Examples, but the present invention is not limited to the following Examples.

### <Manufacturing Method of Liquid crystal polyester Resin 1>

994.5 g (7.2 mol) of parahydroxybenzoic acid, 446.9 g (2.4 mol) of 4,4'-dihydroxybiphenyl, 299.0 g (1.8 mol) of terephthalic acid, 99.7 g (0.6 mol) of isophthalic acid, and 1347.6 g (13.2 mol) of acetic anhydride were charged into a reactor including an agitator, a torque meter, a nitrogen gas inlet tube, a thermometer, and a reflux condenser, 0.2 g of 1-methylimidazole was added, and the inside of the reactor was sufficiently substituted with nitrogen gas.

Thereafter, a temperature was raised from room temperature to 150°C over 30 minutes under a nitrogen gas stream, and the temperature was maintained at the same temperature for reflux for 1 hour.

Then, the temperature was raised from 150°C to 320°C over 2 hours and 50 minutes while distilling off by-product acetic acid or unreacted acetic anhydride, and a prepolymer was obtained at a point in time when the increase in torque was observed as the end of reaction.

The obtained prepolymer was cooled to room temperature and pulverized with a coarse pulverizer. The obtained prepolymer powder was solid-phase polymerized by raising the temperature from room temperature to 250°C over 1 hour, raising the temperature from 250°C to 285°C over 5 hours, and maintaining the temperature at 285°C for 3 hours in a nitrogen gas atmosphere, so that a liquid crystal polyester resin 1 was obtained. The flow start temperature of the obtained liquid crystal polyester resin 1 was 327°C.

### (Examples 1 to 9, and Comparative Examples 1 to 4)

### <Manufacturing Method of Liquid crystal polyester Resin Composition>

After compounding the component (M) and the component (F) with the liquid crystal polyester resin 1 (component (P)) obtained above in the compounding ratio shown in Table 1 below, a liquid crystal polyester resin composition of each example was obtained by using a twin-screw extruder (manufactured by Ikegai Corp, PCM-30).

**[Table 1]**

| | | Example 1 | Example 2 | Example 3 | Example 4 | Example 5 | Example 6 | Example 7 | Example 8 | Example 9 | Comparative Example 1 | Comparative Example 2 | Comparative Example 3 | Comparative Example 4 |
|---|---|---|---|---|---|---|---|---|---|---|---|---|---|---|
| component (P) | LCP-1 | 100 | 100 | 100 | 100 | 100 | 100 | 100 | 100 | 100 | 100 | 100 | 100 | 100 |
| component (M) | (M)-1 | 8.9 | 17.9 | 35.7 | | | | 35.7 | 35.7 | 35.7 | | 78.6 | | |
| | (M)-2 | | | | 35.7 | | | | | | | | | |
| | (M)-3 | | | | | 35.7 | | | | | | | | |
| | (M)-4 | | | | | | 35.7 | | | | | | | |
| component (F) | (F)-1 | 69.6 | 60.7 | 42.9 | 42.9 | 42.9 | 42.9 | 42.9 | 42.9 | 42.9 | 78.6 | | | |
| | (F)-2 | | | | | | | | | | | | | 66.7 |
| | (F)-3 | | | | | | | 0.02 | 0.18 | 0.71 | | | | |

In Table 1, each abbreviation has the following meaning. A numeral value in [] is a compounding amount (part by mass).

LCP-1: Liquid crystal polyester resin 1 described above
(M)-1: Titanium oxide-coated synthetic mica (manufactured by NIHON KOKEN KOGYO CO., LTD., trade name: TWINCLEPEARL SXD, median diameter (D50): 21 µm)
(M)-2: Titanium oxide-coated synthetic mica (manufactured by NIHON KOKEN KOGYO CO., LTD., trade name: TWINCLEPEARL SX, median diameter (D50): 90 µm)
(M)-3: Titanium oxide-coated synthetic mica (manufactured by NIHON KOKEN KOGYO CO., LTD., trade name: TWINCLEPEARL SXA, median diameter (D50): 9 µm)
(M)-4: Titanium oxide-coated synthetic mica (manufactured by NIHON KOKEN KOGYO CO., LTD., trade name: TWINCLEPEARL BXB, median diameter (D50): 13 µm)
(F)-1: Talc (manufactured by Nippon Talc Co., Ltd., trade name: MS-KY, median diameter (D50): 25 µm)
(F)-2: Glass fiber (manufactured by Central Glass Co., Ltd., trade name: milled fiber EFH75-01)
(F)-3: Carbon black (manufactured by Cabot Corporation, trade name: Black pearls 4350)

It should be noted that the median diameters (D50) of (M)-1 to (M)-4 were measured by using, as a measurement device, a scattering type particle diameter distribution measurement device (manufactured by HORIBA, Ltd., trade name: LA-950V2) in a state in which each of (M)-1 to (M)-4 was dispersed in water under the following measurement conditions.

### [Conditions]

Refractive index of particle: 1.59 to O.1i (mica)
Dispersion medium: water
Refractive index of dispersion medium: 1.33

### <Manufacturing of Test Piece>

The liquid crystal polyester resin composition of each example was molded at 330°C to 350°C by using an injection molding machine to obtain a test piece having a size of 60 mm × 40 mm × 2 mmt.

### [Metallic evaluation]

For the test pieces of Examples 1 to 9, and Comparative Examples 1 and 2, a reflectivity of 500 nm at a detection angle of 30° of light, which is incident at an incident angle of 45° and reflected from a surface of the test piece, was measured by using a variable-angle photometer (manufactured by DENSHOKU INDUSTRIES Co., Ltd., trade name: GC5000L).

As the reflectivity is higher, the metallic brilliance is stronger, which means that the appearance is metallic.

The results thereof are shown in Tables 2 and 3.

**[Table 2]**

| | Example 1 | Example 2 | Example 3 | Example 4 | Example 5 | Example 6 | Example 7 | Example 8 | Example 9 |
|---|---|---|---|---|---|---|---|---|---|
| Reflectivity | 110 | 126 | 156 | 121 | 150 | 133 | 142 | 132 | 102 |

**[Table 3]**

| | Comparative Example 1 | Comparative Example 2 |
|---|---|---|
| Reflectivity | 91 | 193 |

From the results shown in Tables 2 and 3, it can be confirmed that the liquid crystal polyester resin compositions of Examples have high reflectivity and high design property.

In addition, it was confirmed that, among Examples, the liquid crystal polyester resin compositions of Examples 7 to 9 containing (F)-3: the carbon black had the same reflectivity as other Examples, but exhibited a more metallic color tone and had excellent design property that imitates a metallic appearance in the visual evaluation.

### [Evaluation of Effect of Suppressing Occurrence of Flow Mark]

The appearance of the test piece of each example was visually observed and evaluated according to the following criteria.

The results thereof are shown in Tables 4 and 5.
A: Approaching an observation surface within 1 meter, and a flow mark is hardly seen from any angle
B: Approaching the observation surface within 1 meter, a flow mark is not clearly seen from a vertical direction, but a flow mark can be seen well from a direction of 45 degrees
C: Approaching the observation surface within 1 meter, and a flow mark can be seen well from any direction
D: A flow mark can be seen well even in a case of being away from the observation surface by 1 meter or more

**[Table 4]**

| | Example 1 | Example 2 | Example 3 | Example 4 | Example 5 | Example 6 | Example 7 | Example 8 | Example 9 |
|---|---|---|---|---|---|---|---|---|---|
| Flow mark | A | A | A | B | A | A | A | A | A |

**[Table 5]**

| | Comparative Example 1 | Comparative Example 2 | Comparative Example 3 | Comparative Example 4 |
|---|---|---|---|---|
| Flow mark | A | D | C | D |

From the results shown in Tables 4 and 5, it can be confirmed that the molded body (ovenware) produced by using the liquid crystal polyester resin compositions of Examples suppresses the occurrence of a flow mark.

From the above, it can be confirmed that the liquid crystal polyester resin compositions of Examples to which the present invention is applied have high design property and can suppress the occurrence of a flow mark.

Preferable examples of the present invention have been described above, but the present invention is not limited to these examples. It is possible to add, omit, replace, and make other changes to the configuration without departing from the spirit of the present invention. The present invention is not limited by the above description, but only limited by the scope of the appended claims.

## Claims

1. A liquid crystal polyester resin composition, comprising:
a component (P) : a liquid crystal polyester resin;
a component (M) : a non-metallic and powdery pigment having a metallic color; and
a component (F) : an inorganic filler excluding the component (M).

2. The liquid crystal polyester resin composition according to Claim 1,
wherein the component (M) is a component in which a plate-shaped inorganic filler particle is coated with a metal oxide.

3. The liquid crystal polyester resin composition according to Claim 2,
wherein the plate-shaped inorganic filler particle in the component (M) contains mica.

4. The liquid crystal polyester resin composition according to Claim 3,
wherein the plate-shaped inorganic filler particle in the component (M) contains synthetic mica.

5. The liquid crystal polyester resin composition according to any one of Claims 1 to 4,
wherein a content of the component (M) is 4 to 50 parts by mass with respect to 100 parts by mass of the component (P).

6. The liquid crystal polyester resin composition according to any one of Claims 1 to 5,
wherein the component (F) is a plate-shaped particle.

7. The liquid crystal polyester resin composition according to any one of Claims 1 to 6,
wherein a content of the component (F) is 10 to 80 parts by mass with respect to 100 parts by mass of the component (P).

8. The liquid crystal polyester resin composition according to any one of Claims 1 to 7,
wherein a median diameter (D50) of the component (M) is 5 to 100 µm.

9. A molded body produced from the liquid crystal polyester resin composition according to any one of Claims 1 to 8.

10. The molded body according to Claim 9,
wherein the molded body is ovenware.
